# EUROPEAN PATENT APPLICATION

(11) **EP 4 459 457 A1**
(43) Date of publication of application: **06.11.2024**
(21) Application number: 23864828.1
(22) Date of filing: 18.09.2023
(51) Int. Cl.: G06F 8/38

(54) **PAGE RENDERING METHOD AND APPARATUS, DEVICE, STORAGE MEDIUM, AND COMPUTER PROGRAM PRODUCT**

(30) Priority: 16.09.2022 CN 202211134809
(71) Applicant: Tencent Technology (Shenzhen) Company Limited, Shenzhen, Guangdong 518057 (CN)
(72) Inventor: HUANG, Weiwei, Shenzhen, Guangdong 518057 (CN); HUANG, Sicheng, Shenzhen, Guangdong 518057 (CN); SUN, Guangdong, Shenzhen, Guangdong 518057 (CN)
(74) Representative: Gunzelmann, Rainer
(86) International application number: PCT/CN2023/119518
(87) International publication number: WO 2024/056100

(57) **Abstract**

Disclosed in the present application are a page rendering method and apparatus, a device, a storage medium, and a computer program product. Related embodiments can be applied to scenes, such as cloud technology. The method comprises: parsing a target page to obtain a corresponding page configuration tree; obtaining layout information of the target page by using a cross-platform layout system, wherein the layout information of the target page is obtained after the cross-platform layout system performs node layout processing by traversing nodes in a layout node tree, and the layout node tree is constructed on the basis of the page configuration tree; generating a drawing instruction on the basis of the layout information of the target page and a render object tree; and in response to the drawing instruction, drawing the target page.

## Description

### RELATED APPLICATION

This application is based upon and claims priority to Chinese Patent Application No. 202211134809.4, filed on September 16, 2022, which is incorporated herein by reference in its entirety.

### FIELD OF THE TECHNOLOGY

This application relates to the field of computer technologies, and in particular, to a page rendering method and apparatus, a device, a storage medium, and a computer program product.

### BACKGROUND OF THE DISCLOSURE

A user interface (UI for short) is a medium that implements man-machine interaction and information exchange. An electronic device may display the user interface on a screen of the electronic device by rendering a page, and may respond to a feedback operation of an object in the user interface.

In an existing page rendering method, a web page view engine (that is, WebView) is usually used as a renderer to render a page. As a specific implementation of an open standard, the WebView has an extremely reliable rendering capability and excellent performance. However, it is found through research that for some program pages, especially a mini program page, the WebView has a problem of high occupation of a hardware resource when performing rendering. As a result, rendering is not timely when rendering is performed on the electronic device such as a mobile terminal.

### SUMMARY

Embodiments of this application provide a page rendering method and apparatus, a device, a storage medium, and a computer program product, to improve a rendering rate when rendering a page.

According to an aspect, an embodiment of this application provides a page rendering method, where the page rendering method is applicable to an electronic device and the method includes:
parsing a target page to obtain a corresponding page configuration tree;
obtaining layout information of the target page by using a cross-platform layout system, the layout information of the target page being obtained by the cross-platform layout system by traversing nodes in a layout node tree and performing node layout processing, the layout node tree being constructed based on the page configuration tree;
generating a painting instruction based on the layout information of the target page and a render object tree; and
painting the target page in response to the painting instruction.

According to an aspect, an embodiment of this application provides a page rendering apparatus, including:
a logical processing unit, configured to parse a target page to obtain a corresponding page configuration tree;
a rendering unit, configured to obtain layout information of the target page by using a cross-platform layout system, the layout information of the target page being obtained by the cross-platform layout system by traversing nodes in a layout node tree and performing node layout processing, the layout node tree being constructed based on the page configuration tree;
the rendering unit being further configured to generate a painting instruction based on the layout information of the target page and a render object tree; and
a graphics painting unit, configured to paint the target page in response to the painting instruction.

According to an aspect, an embodiment of this application provides an electronic device, where the electronic device includes an input interface and an output interface and further includes:
a processor, being suitable to implement one or more instructions; and
a computer storage medium, having one or more instructions stored therein, the one or more instructions being suitable to be loaded by the processor, to perform the page rendering method.

According to an aspect, an embodiment of this application provides a computer storage medium, having computer program instructions stored therein, the computer program instructions, when executed by a processor, being configured to perform the page rendering method.

According to an aspect, an embodiment of this application provides a computer program product, having a computer program stored therein, the computer program being stored in a computer storage medium, and the computer program being read by a processor of an electronic device from the computer storage medium and executed by the processor, causing the electronic device to perform the page rendering method.

In the embodiments of this application, a page rendering method in which a page is rendered collaboratively by a layout rendering framework and a cross-platform layout system is provided. After style parsing processing is performed on a target page, to obtain a page configuration tree Widget Tree corresponding to the target page, the cross-platform layout system may be invoked through the layout rendering framework, and the cross-platform layout system constructs a layout node tree Yoga Tree based on the page configuration tree Widget Tree, and traverses nodes in the layout node tree Yoga Tree and performs node layout processing, to obtain layout information of the target page. A painting instruction may be generated based on the layout information of the target page, and the target page is painted in response to the painting instruction. The layout rendering framework can quickly construct a user interface, and a more professional cross-platform layout system is introduced into a layout task of a rendering procedure for performing layout processing to obtain the layout information of the target page, so that a rate of obtaining the layout information of the target page can be improved, and a rendering rate at which rendering processing is performed on a page can be improved, thereby implementing efficient page rendering, and making page rendering in an electronic device more timely.

### BRIEF DESCRIPTION OF THE DRAWINGS

To describe the technical solutions in embodiments of this application or in the related art more clearly, the following briefly describes the accompanying drawings required for describing embodiments or the related art. Apparently, the accompanying drawings in the following description show merely some embodiments of this application, and a person of ordinary skill in the art may still derive other drawings from the accompanying drawings without creative efforts.
FIG. 1 is a schematic diagram of triggering a target page according to an embodiment of this application.
FIG. 2 is a schematic diagram of a rendering procedure based on a target rendering engine Skyline according to an embodiment of this application.
FIG. 3 is a schematic diagram of cross-language communication according to an embodiment of this application.
FIG. 4 is a schematic flowchart of a page rendering method according to an embodiment of this application.
FIG. 5 is a schematic diagram of creating a page configuration tree Widget Tree corresponding to a target page according to an embodiment of this application.
FIG. 6A is a schematic flowchart of obtaining layout information of a target page according to an embodiment of this application.
FIG. 6B is a schematic diagram of determining layout information of nodes in a render object tree according to an embodiment of this application.
FIG. 7 is a schematic flowchart of another page rendering method according to an embodiment of this application.
FIG. 8 is a schematic diagram of a structure of a page rendering apparatus according to an embodiment of this application.
FIG. 9 is a schematic diagram of a structure of an electronic device according to an embodiment of this application.

### DESCRIPTION OF EMBODIMENTS

The following clearly and completely describes the technical solutions in embodiments of this application with reference to the accompanying drawings in the embodiments of this application. Apparently, the embodiments to be described are merely a part rather than all of the embodiments of this application. All other embodiments obtained by a person of ordinary skilled in the art based on the embodiments of this application without creative efforts shall fall within the protection scope of this application.

The embodiments of this application provide a page rendering solution. Style parsing processing may be performed on a target page to obtain a page configuration tree (for example, a Widget Tree) corresponding to the target page. Then, a cross-platform layout system may be invoked through a layout rendering framework to obtain layout information of the target page. A painting instruction may be generated based on the layout information of the target page and a render object tree obtained through the layout rendering framework based on the page configuration tree Widget Tree, and the target page is painted in response to the painting instruction. The cross-platform layout system constructs a layout node tree (for example, may be Yoga Tree) based on the page configuration tree Widget Tree, and traverses nodes in the layout node tree Yoga Tree and performs node layout processing, to obtain the layout information of the target page. The target page may be a web page, a program page, a mini program page, or the like. Embodiments of this application is described by using the mini program page as the target page.

In some embodiments, the page rendering solution may be performed by an electronic device. The electronic device may be a terminal device or a server. The terminal device herein may include but is not limited to: a computer, a smart phone, a tablet computer, a notebook computer, a smart home appliance, a vehicle-mounted terminal, an intelligent wearable device, or the like. The server herein may be an independent physical server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform.

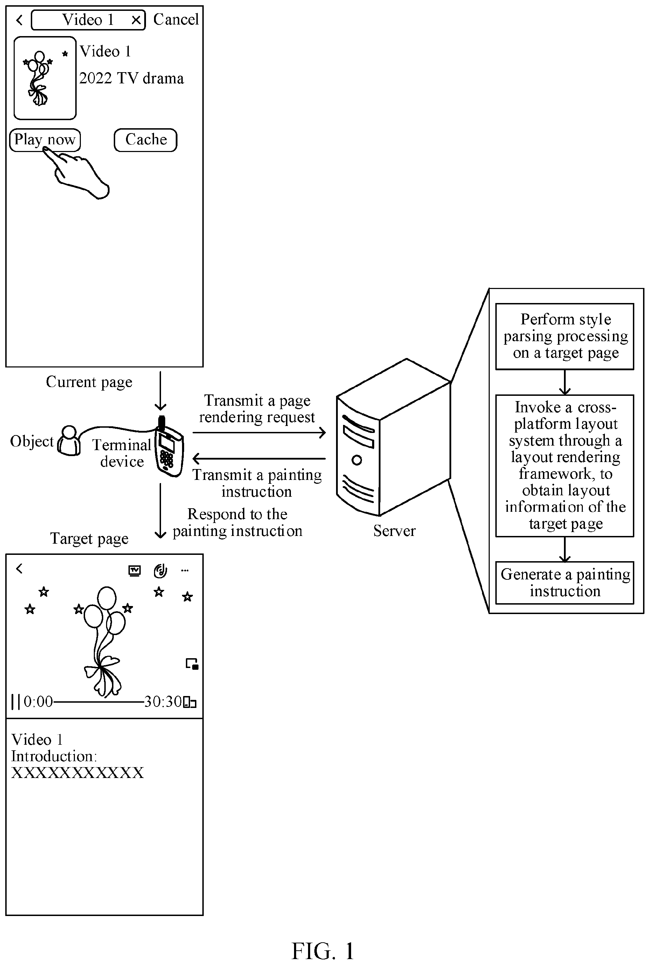

In some embodiments, the page rendering solution may alternatively be independently or collaboratively performed by other electronic devices having computing power. This is not limited in the embodiments of this application. For example, the page rendering solution may be collaboratively performed by a terminal device and a server. FIG. 1 is a schematic diagram of triggering display of a target page according to an embodiment of this application. After an object performs a related operation of triggering display of a target page in a current page displayed on a terminal device, the terminal device may transmit a page rendering request to a server. After receiving the page rendering request, the server may perform related operations such as performing style parsing processing on the target page, obtaining layout information of the target page by invoking a cross-platform layout system through a layout rendering framework, and generating a painting instruction, to obtain the painting instruction, and may transmit the painting instruction to the terminal device. After receiving the painting instruction, the terminal device may paint and display the target page in response to the painting instruction.

In an embodiment, the page rendering solution may be performed by a target rendering engine Skyline deployed in the electronic device. The target rendering engine Skyline may be constructed based on the layout rendering framework and the cross-platform layout system, so that the target rendering engine Skyline can invoke the layout rendering framework and the cross-platform layout system to obtain the layout information of the target page, and render the target page based on the layout information of the target page. The layout rendering framework may be an existing user interface framework (that is, a UI framework) that can quickly construct a user interface. The user interface framework may be cross-platform. To be specific, the user interface may be constructed based on the user interface framework in a plurality of platforms (for example, an Android platform and an iOS platform). In some embodiments, the user interface framework may be Flutter, and can quickly construct a native user interface in the plurality of platforms. The cross-platform layout system may also be referred to as a cross-platform layout engine, and is a layout system that may be used in a plurality of different platforms (which may be understood as different operating systems) and is configured to perform page layout. The cross-platform layout system is mainly configured to implement a layout-related task in a rendering procedure in the plurality of platforms (for example, an Android platform and an iOS platform). For example, the cross-platform layout system may be Yoga based on a flexible box layout mode (Flexbox).

An example in which the layout rendering framework is Flutter and the cross-platform layout system is Yoga is used for description below in the embodiments of this application. The cross-platform layout system Yoga is introduced, and layout processing is performed, so that learning costs caused by a difference between a layout based on Constraints and a layout based on a Web page of the layout rendering framework Flutter can be reduced. In some embodiments, the electronic device may perform style parsing processing on the target page through the target rendering engine Skyline, to obtain a page configuration tree Widget Tree corresponding to the target page; invoke, through the layout rendering framework Flutter, the cross-platform layout system Yoga to obtain the layout information of the target page, the layout information of the target page being obtained by the cross-platform layout system Yoga by traversing nodes in a layout node tree and performing node layout processing, the layout node tree being constructed based on the page configuration tree Widget Tree; generate a painting instruction through the target rendering engine Skyline based on the layout information of the target page and a render object tree, the render object tree being obtained through the layout rendering framework based on the page configuration tree Widget Tree; and paint and display the target page in response to the painting instruction through the target rendering engine Skyline.

In an embodiment, the target rendering engine Skyline may render a page through a logical processing thread (also referred to as an AppService thread), a rendering thread, and a graphics painting thread. The logical processing thread may be configured for performing style parsing processing on the target page, the rendering thread may be configured for invoking, through the layout rendering framework, the cross-platform layout system to obtain the layout information of the target page and generating the painting instruction, and the graphics painting thread may be configured for painting the target page in response to the painting instruction and displaying the painted target page. In some embodiments, the logical processing thread may be configured for performing tasks such as mini program JS logic, mini program framework logic (also referred to as a mini program framework operation node), and style calculation to obtain an application style of a page that needs to be rendered. The JS logic is interaction logic, and may be configured for responding to an operation of an object, for example, responding to triggering, information entry, or real-time position application of the object. Subsequently, responding to an operation of triggering display of the target page by the object is used as an example, that is, rendering of the target page is used as an example. The application style of the target page is included in the page configuration tree Widget Tree corresponding to the target page. The mini program framework logic and the style calculation task may collaboratively implement construction of the page configuration tree Widget Tree corresponding to the target page. In some embodiments, the mini program framework logic is configured for creating, based on a page template of the target page and component data corresponding to the target page, a component node tree (which may be a component node tree Shadow Tree) corresponding to the page template, and the style calculation task is configured for creating the page configuration tree Widget Tree corresponding to the target page based on the component node tree Shadow Tree. In some embodiments, the rendering thread may be configured for performing tasks such as Layout (that is, Layout), composition (that is, Composite), and paint (that is, Paint) based on the obtained application style, that is, based on the obtained page configuration tree Widget Tree corresponding to the target page, to obtain the painting instruction corresponding to the target page. The graphics painting thread may be configured for performing tasks such as page painting and display, that is, may perform rasterization (that is, Raster) on the received painting instruction, and transmit a result of the rasterization to a graphics processing unit (GPU) to paint and display the target page.

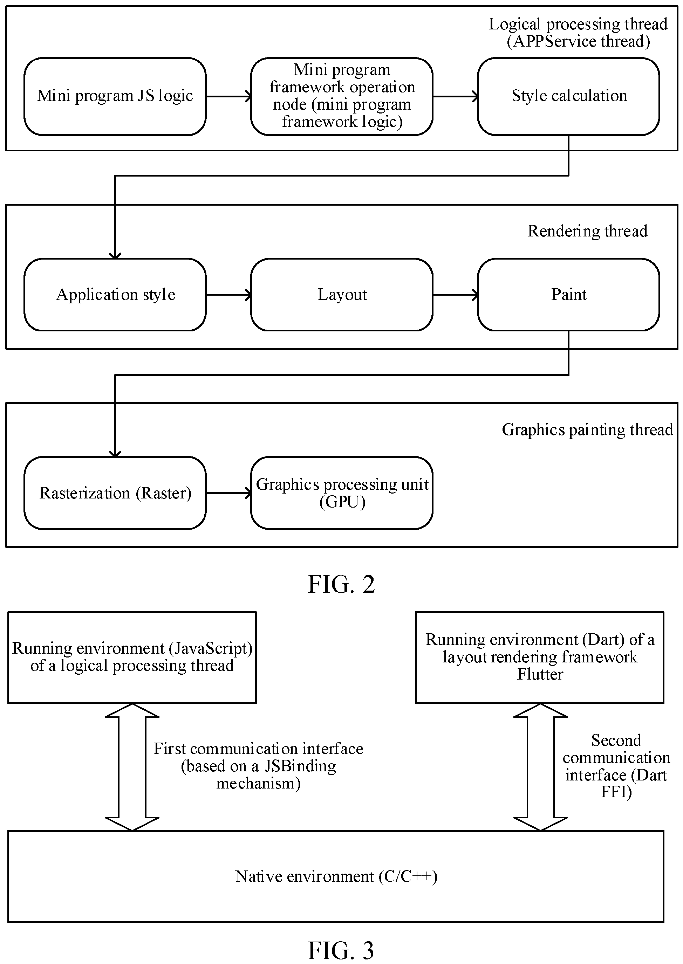

FIG. 2 is a schematic diagram of a rendering procedure based on a target rendering engine Skyline according to an embodiment of this application. After an object performs a related operation of triggering display of a target page in a current page displayed on a terminal device, a target rendering engine Skyline may perform a mini program JS logic task through a logical processing thread, that is, may generate, in response to the triggering operation of the object in the current page, a routing event for rendering the target page; may perform a mini program framework logic task based on the routing event, that is, may create, based on a page template of the target page and component data corresponding to the target page, a component node tree Shadow Tree corresponding to the page template; and may perform a style calculation task, that is, may create, based on the component node tree Shadow Tree, a page configuration tree Widget Tree corresponding to the target page, and transfer the page configuration tree Widget Tree corresponding to the target page to a rendering thread. The page configuration tree Widget Tree of the target page includes an application style of the target page. The rendering thread may perform tasks such as layout and painting based on the obtained page configuration tree Widget Tree corresponding to the target page to generate a painting instruction. In other words, the rendering thread may perform tasks such as layout and painting based on the obtained application style to generate the painting instruction, and transfer the painting instruction to a graphics painting thread. The graphics painting thread may perform tasks such as page painting and display, that is, may perform rasterization on the received painting instruction, and transmit a result of the rasterization to a GPU to paint and display the target page.

Compared with a procedure in which WebView is used to render a page in an existing page rendering method, the rendering procedure includes tasks such as JS logic processing, document object model (DOM) tree creation, cascading style sheet (CSS) parsing, style calculation, layout, painting (composition), and page painting and display. The DOM tree creation task is similar to the mini program framework logic task in the rendering procedure of the target rendering engine Skyline, and the CSS parsing and the style calculation are similar to the style calculation task in the rendering procedure of the target rendering engine Skyline. Because all tasks in the rendering procedure of WebView occur on a main thread, and the main thread has too many tasks, parallelism is not high enough, and the JS logic processing task consumes long time, resulting in interface freezing. The target rendering engine Skyline provided in the embodiments of this application creates one rendering thread to share the tasks in the rendering procedure, so that parallelism during processing can be improved and a possibility of the interface freezing can be reduced. In addition, the tasks such as the mini program JS logic and the mini program framework logic in the target rendering engine Skyline are performed by the logical processing thread, so that cross-thread communication overheads when the mini program JS logic task and the mini program framework logic task are performed can be reduced. Time required for rendering a same page by using the WebView is compared with time required for rendering the same page by using the target rendering engine Skyline. It is found through comparison that in an electronic device with a relatively high configuration, the time consumed by using the target rendering engine Skyline is about 50% to 60% of that of using the WebView, and advantages are more apparent in an electronic device with a relatively low configuration.

In an embodiment, there is no need to migrate a mini program from WebView to the target rendering engine Skyline. The target rendering engine Skyline keeps a syntax and an interface of an upper framework essentially unchanged, and only a local adjustment needs to be performed, which mainly strengthens constraints of a style (WXSS style), a built-in component, and some features. If it is expected that the target rendering engine Skyline is invoked to render the target page, configuration information of the target page is obtained, and the target page is configured based on the configuration information. The configuration information may include: setting a renderer that is configured to render the target page and that is in a configuration file of the target page to the target rendering engine Skyline, where the configuration file of the target page is a json file corresponding to the target page. This may be implemented by adding a "renderer": "skyline" field to the configuration file of the target page. Through this configuration, when the target page needs to be rendered, the target rendering engine Skyline may be invoked for processing. In some embodiments, if it is expected that the target rendering engine Skyline is invoked to render a component in the target page, only the component needs to be configured. In this case, the configuration may include: setting, in a configuration file of the component, a renderer configured to render the component to the target rendering engine Skyline. The configuration file of the component is a json file corresponding to the component. In some embodiments, if it is expected that the target rendering engine Skyline is invoked to render a specific mini program page, similar configuration needs to be performed on the corresponding mini program page. In some embodiments, if it is expected that the target rendering engine Skyline is invoked to render all mini program pages in a mini program, the mini program may be globally configured. In this case, the configuration may include: setting, in a global configuration file of the mini program, a renderer to the target rendering engine Skyline, and the global configuration file of the mini program is an app.json file.

In an embodiment, after the configuration information of the target page is obtained, and the renderer configured to render the target page is set to the target rendering engine Skyline, rule configuration information for the target rendering engine is further obtained, and rule adaptation for the target rendering engine Skyline is performed on the target page. The rule configuration information includes one or a combination of two of rule configuration information that prohibits global scrolling of the target page and rule configuration information that allows customization of a navigation bar of the target page. The rule configuration information that prohibits global scrolling of the target page may be implemented by setting a configuration item "disableScroll" in the configuration file of the target page to true. In this case, if scrolling needs to be implemented in a specific region of the target page, a scroll-view manner is required. The rule configuration information that allows customization of the navigation bar of the target page may be implemented by setting a configuration item "navigationStyle" in the configuration file of the target page to "custom". In this case, the navigation bar of the target page needs to be customized. After the target page is configured and the renderer configured to render the target page is set to the target rendering engine Skyline, the rule adaptation for the target rendering engine Skyline is performed on the target page, to reduce a possibility that an error occurs on the target rendering engine Skyline due to forgetting or a rule adaptation error when rule adaptation for the target rendering engine Skyline is manually performed on the target page.

In some embodiments, the target rendering engine Skyline supports a common attribute, and supports a flexible layout (that is, a flex layout), and an absolute positioning layout and a relative positioning layout (that is, an absolute & relative positioning layout) in terms of a layout. Therefore, after the target page is configured and the renderer configured to render the target page is set to the target rendering engine Skyline, style adaptation may be further performed for the target rendering engine Skyline. In some embodiments, the target rendering engine Skyline supports a dependency on-demand injection feature. Generally, when a mini program is started, all JS codes of all code packages (a main package, a sub-package, a plug-in package, an extension library, or the like) on which starting of a page depends are merged and injected, including other pages that are not accessed and unused customized components. In addition, JS codes of all pages and customized components are executed immediately. This causes many unused codes to be injected and executed in a mini program running environment, which affects injection time and memory occupation. However, the on-demand injection may enable only a customized component and a page code that are required by a currently accessed page to be injected to the mini program. A page that is not accessed and a customized component that is not declared on the current page are not loaded and initialized, and a corresponding code file is not executed, thereby reducing injection time and memory occupation. In some embodiments, configuration of the dependency on-demand injection feature may be implemented by adding a "lazyCodeLoading": "requiredComponents" field in a global configuration page of the mini program.

In an embodiment, when the target rendering engine Skyline is invoked to render the target page, a layout rendering framework Flutter may be invoked through the rendering thread to obtain the layout information of the target page, so that the target page may be painted and displayed based on the layout information of the target page. However, generally, a programming language used by the target rendering engine Skyline is different from a programming language used by the layout rendering framework Flutter. The target rendering engine Skyline usually uses a JavaScript language, and the Flutter usually uses a Dart language. Therefore, cross-language communication between the JavaScript language and the Dart language needs to be implemented, so that the layout rendering framework Flutter can be invoked through the target rendering engine Skyline. In a feasible implementation, cross-language communication between the JavaScript language and the Dart language may be implemented based on a host program object of the mini program. In some embodiments, a first communication interface may be created between a running environment of the logical processing thread of the target rendering engine Skyline and an interactive environment provided by the host program object to implement communication between the logical processing thread and the host program object. A second communication interface may be created between a running environment of the rendering thread of the target rendering engine Skyline and the interactive environment provided by the host program object to implement communication between the rendering thread and the host program object. Because the running environment of the logic processing thread is a JavaScript VM (that is, a JavaScript program virtual machine), the host program object may provide a C/C++ language-based interactive environment, that is, a native environment, and the running environment of the rendering thread is a running environment of the layout rendering framework Flutter, that is, a Dart VM (that is, a Dart program virtual machine), cross-language communication between JavaScript and C/C++ may be implemented through the created first communication interface, and cross-language communication between Dart and C/C++ may be implemented through the created second communication interface, that is, communication between the layout rendering framework Flutter and the host program object may be implemented through the second communication interface.

In some embodiments, because the JavaScript VM provides a communication mechanism (a JSBinding mechanism) for communicating with C/C++, and the Dart VM provides communication interfaces (Dart API and Dart FFI) for communicating with C/C++, in this case, the first communication interface may be a first communication interface constructed based on the JSBinding mechanism, and the second communication interface may be any one of the Dart API and the Dart FFI. In some embodiments, based on consideration of performance, the Dart FFI is selected as the second communication interface, to achieve a better effect. FIG. 3 is a schematic diagram of cross-language communication according to an embodiment of this application. Cross-language communication between JavaScript and C/C++ is implemented based on a JSBinding mechanism, and cross-language communication between Dart and C/C++ is implemented based on Dart FFI. Based on this, cross-language communication between JavaScript and Dart may be implemented.

In a specific implementation of this application, object-related data is involved, for example, the component data corresponding to the target page includes the object-related data. When embodiments of this application are applied to a specific product or a technology, user permission or consent needs to be obtained, and collection, use and processing of relevant data need to comply with relevant local laws, regulations and standards.

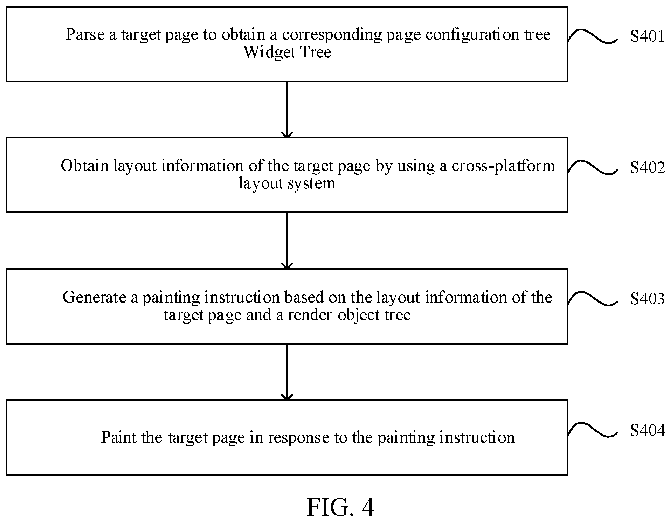

Based on the foregoing page rendering solution, an embodiment of this application provides a page rendering method. FIG. 4 is a schematic flowchart of a page rendering method according to an embodiment of this application. The page rendering method shown in FIG. 4 may be performed by an electronic device. As shown in FIG. 4, the page rendering method may include the following operations.

S401. Parse a target page to obtain a corresponding page configuration tree Widget Tree.

In an embodiment, the performing, by the electronic device, style parsing processing on the target page to obtain a page configuration tree Widget Tree corresponding to the target page may include: parsing the target page to obtain component data (that is, this.data); creating, based on a page template of the target page and the component data, a component node tree Shadow Tree corresponding to the page template; and creating, based on the component node tree Shadow Tree, the page configuration tree Widget Tree corresponding to the target page. The page template of the target page may be a template configured for describing a page structure of the target page, and may be a WXML template. The component data may be data that needs to be filled into the page template of the target page. In some embodiments, the style parsing processing performed by the electronic device on the target page may be implemented through a logical processing thread in a target rendering engine Skyline. The page configuration tree Widget Tree corresponding to the target page includes an application style, and the application style may be transferred to a rendering thread in the target rendering engine Skyline for subsequent processing. After an object performs a related operation of triggering display of the target page in a current page displayed on the terminal device, the target rendering engine Skyline may perform a mini program JS logic task through the logical processing thread, that is, may generate, in response to the triggering operation of the object in the current page, a routing event for rendering the target page; may perform a mini program framework logic task based on the routing event, that is, may perform a related process of creating the component node tree Shadow Tree; and may perform a style calculation task, that is, may create, based on the component node tree Shadow Tree, the page configuration tree Widget Tree corresponding to the target page, and transfer the page configuration tree Widget Tree corresponding to the target page to the rendering thread, that is, to a layout rendering framework Flutter. In some embodiments, the component node tree Shadow Tree may alternatively be created by invoking a first communication interface to transfer content data to a host program object of a mini program. The content data may include the page template and the component data. In other words, the first communication interface is invoked to transfer the content data to the host program object of the mini program, the content data including the page template and the component data; and the component node tree corresponding to the page template is created through the host program object based on the content data.

In some embodiments, the host program object may transfer the created page configuration tree Widget Tree to the layout rendering framework Flutter through a second communication interface.

In some embodiments, the creating, by the electronic device based on the component node tree Shadow Tree, the page configuration tree Widget Tree corresponding to the target page may include: performing style matching processing on nodes in the component node tree Shadow Tree, to obtain element styles (ComputedStyle) corresponding to the nodes in the component node tree Shadow Tree; generating corresponding page configuration nodes (which may be page configuration nodes Widget) based on the element styles ComputedStyle corresponding to the nodes in the component node tree Shadow Tree; and combining the page configuration nodes Widget corresponding to the nodes in the component node tree Shadow Tree, to obtain the page configuration tree Widget Tree. In some embodiments, the performing, by the electronic device, style matching processing on nodes in the component node tree Shadow Tree, to obtain element styles ComputedStyle corresponding to the nodes in the component node tree Shadow Tree may include: traversing the nodes in the component node tree Shadow Tree; and performing an inflation procedure (that is, an Inflate procedure) and a style recalculation procedure (that is, a RecalcStyle procedure) on the currently traversed nodes, and performing style matching calculation on the currently traversed nodes in this procedure, to obtain the element styles ComputedStyle corresponding to the currently traversed nodes. In some embodiments, the nodes in the component node tree Shadow Tree may be traversed in a pre-order traversing manner, a middle-order traversing manner, or the like. The pre-order traversing manner is described in the embodiments of this application. In some embodiments, the page configuration nodes Widget corresponding to the nodes in the component node tree Shadow Tree may be combined based on a structure of the component node tree Shadow Tree.

In a feasible implementation, the target rendering engine Skyline may provide a component organization framework Exparser built into a mini program basic library; may provide basic support for various components of a mini program and organize and manage the components; and may maintain information related to a node tree of an entire page, and perform a corresponding operation on the node tree. After the mini program JS logic task is performed through the logical processing thread to generate the routing event for rendering the target page, the routing event may be transmitted to the mini program basic library. After receiving the routing event, the mini program basic library may perform, based on the routing event, the mini program framework logic task through the component organization framework Exparser, that is, may perform a related process of creating the component node tree Shadow Tree. Alternatively, the component organization framework Exparser may perform the style calculation task, that is, may create, based on the component node tree Shadow Tree, the page configuration tree Widget Tree corresponding to the target page, and transfer the page configuration tree Widget Tree corresponding to the target page to the rendering thread.

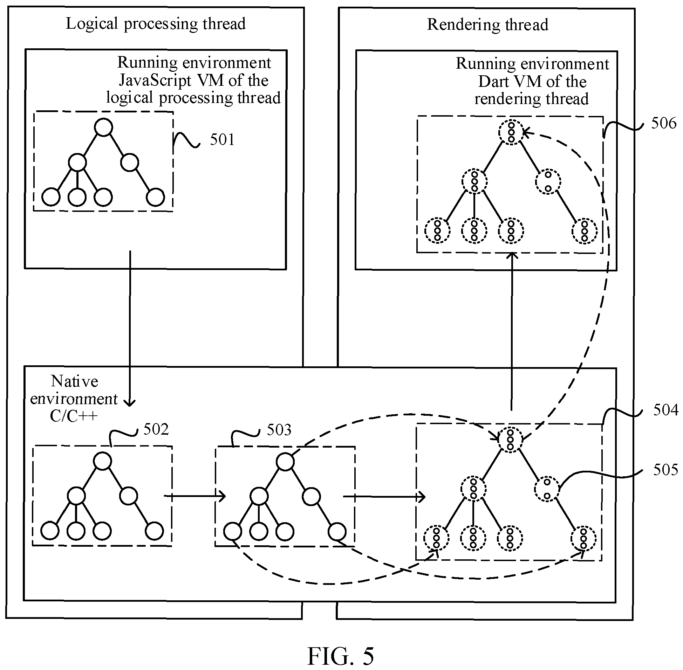

In some embodiments, the component node tree Shadow Tree corresponding to the page template created by the electronic device through the component organization framework Exparser may be created in a native environment by invoking the first communication interface to transfer the content data to a C/C ++ language-based interaction environment (that is, the native environment) provided by the host program object of the mini program in a running environment JavaScript VM of the logical processing thread. Then, the page configuration tree Widget Tree corresponding to the target page may be created in the native environment based on the component node tree Shadow Tree and may be transferred to a running environment Dart VM of the layout rendering framework Flutter through the second communication interface, to transfer the page configuration tree Widget Tree to the layout rendering framework Flutter. FIG. 5 is a schematic diagram of creating a page configuration tree Widget Tree corresponding to a target page according to an embodiment of this application. 501 is a node tree corresponding to a page template of a target page. 502 is a component node tree Shadow Tree. 503 is a component node tree Shadow Tree obtained by performing style matching processing on nodes in the component node tree Shadow Tree. 504 is a page configuration tree Widget Tree. 505 is one of page configuration nodes. 506 is a page configuration tree Widget Tree transferred to a layout rendering framework Flutter.

S402. Obtain layout information of the target page by using a cross-platform layout system.

The cross-platform layout system Yoga constructs a layout node tree Yoga Tree based on the page configuration tree Widget Tree, and traverses nodes in the layout node tree Yoga Tree and performs node layout processing, to obtain the layout information of the target page. In some embodiments, the layout node tree Yoga Tree may be constructed by the cross-platform layout system Yoga based on the page configuration tree Widget Tree. The cross-platform layout system Yoga may run in a native environment. In some embodiments, the cross-platform layout system Yoga first constructs an element tree based on nodes in the page configuration tree, and then performs differential analysis on the element tree to obtain a render object tree corresponding to the page configuration tree. When the render object tree initiates a layout, a layout method is invoked to obtain the layout node tree Yoga Tree. When the element tree is constructed based on the nodes in the page configuration tree, each element object may be created by invoking a createElement () method, to form the element tree based on the element object. In some embodiments, the layout node tree Yoga Tree may alternatively be constructed by another platform that can construct the layout node tree Yoga Tree in the native environment. An example in which the layout node tree Yoga Tree is constructed by the cross-platform layout system Yoga based on the page configuration tree Widget Tree is used for description in the embodiments of this application.

In an embodiment, that the electronic device invokes, through the layout rendering framework Flutter, the cross-platform layout system Yoga and obtains the layout information of the target page may be implemented by the rendering thread in the target rendering engine Skyline and may include: invoking the cross-platform layout system Yoga through the layout rendering framework Flutter; constructing, through the cross-platform layout system Yoga, the layout node tree Yoga Tree corresponding to the page configuration tree Widget Tree; traversing nodes in the layout node tree Yoga Tree through the cross-platform layout system Yoga and performing node layout processing, to obtain the layout information of the target page, and storing the layout information of the target page in a shared memory; and obtaining, from the shared memory, the layout information of the target page through the layout rendering framework Flutter. The nodes included in the layout node tree Yoga Tree correspond to elements that need to be rendered when the target page is rendered, that is, a changed part in the page when a current page is jumped to the target page. The nodes in the layout node tree Yoga Tree may be traversed in the pre-order traversing manner, the middle-order traversing manner, or the like. This is not limited in the embodiments of this application. The layout information of the target page may include attribute information of the elements that need to be rendered when the target page is rendered, for example, attributes related to a size, a position, and the like. In some embodiments, in a process of traversing, through the cross-platform layout system, the nodes in the layout node tree Yoga Tree and performing node layout processing, the layout node tree is traversed through the cross-platform layout system, and a layout algorithm is applied to each node in the layout node tree, to obtain layout information of the node, where the layout information obtained herein includes at least offset information between the node and a parent node of the node; when obtained layout information of a node does not include size information of the node, measurement processing is performed on the node to obtain the size information of the node; the size information of the node is incorporated into the layout information of the node; and finally, layout information of the nodes in the layout node tree is determined as the layout information of the target page. The layout algorithm of block/flex may be applied to each node in the layout node tree. If an offset between a node and a parent node of the node and size information (including a width and a height) of the node can be obtained in this case, the offset between the node and the parent node of the node and the size information are determined as layout information of the node. An offset between a node and a parent node of the node may be determined based on position information of the node and position information of the parent node of the node, and refers to an offset between a position of the node and a position of the parent node of the node.

In some embodiments, if only the offset between the node and the parent node of the node is obtained through the layout algorithm, measurement processing needs to be performed on the node. In some embodiments, a measure method may be invoked to perform measurement processing on the node to obtain a width and a height of the node. Nodes such as a picture and a text each have a fixed size. A picture node is used as an example. A size of a picture is determined when the picture is generated. However, for the cross-platform layout system, the size of the picture cannot be obtained through the layout algorithm. In this case, size information of the picture needs to be obtained from a decoder of the picture by invoking the measure method.

In some embodiments, the layout information of the target page may include layout information of the nodes in the layout node tree Yoga Tree, and the electronic device may further construct, through the layout rendering framework Flutter, the render object tree corresponding to the page configuration tree Widget Tree. Nodes in the render object tree one to one correspond to the nodes in the layout node tree Yoga Tree. In this case, the obtaining, from the shared memory, the layout information of the target page through the layout rendering framework Flutter may include: obtaining, from the shared memory, the layout information of the nodes in the layout node tree Yoga Tree through the layout rendering framework Flutter; and correspondingly determining layout information of the nodes in the render object tree based on the obtained layout information of the nodes.

The nodes included in the render object tree correspond to the elements that need to be rendered when the target page is rendered, that is, a changed part in the page when the current page is jumped to the target page. Based on this, the constructing, by the electronic device through the layout rendering framework Flutter, the render object tree corresponding to the page configuration tree Widget Tree may include: constructing an element tree based on nodes in the page configuration tree Widget Tree, and performing differential analysis on the element tree to obtain the render object tree corresponding to the page configuration tree Widget Tree. In some embodiments, when performing differential analysis on the element tree through the layout rendering framework Flutter, to obtain the render object tree corresponding to the page configuration tree Widget Tree, the electronic device may obtain an element tree configured for rendering the current page , where the element tree is referred to as a comparison element tree, and generate the render object tree corresponding to the page configuration tree Widget Tree based on a node difference between the element tree and the comparison element tree. In some embodiments, if the target page is the first mini program page displayed after the mini program is started, the comparison element tree is null, and the render object tree corresponding to the page configuration tree Widget Tree may be directly generated based on the element tree.

In some embodiments, the layout information of the nodes in the layout node tree Yoga Tree is obtained from the shared memory through the layout rendering framework Flutter, and the layout information of the nodes in the render object tree is correspondingly determined based on the obtained layout information and may be obtained by traversing the render object tree based on the layout rendering framework Flutter. In some embodiments, the render object tree may be traversed in the pre-order traversing manner, the middle-order traversing manner, or the like. This is not limited in the embodiments of this application.

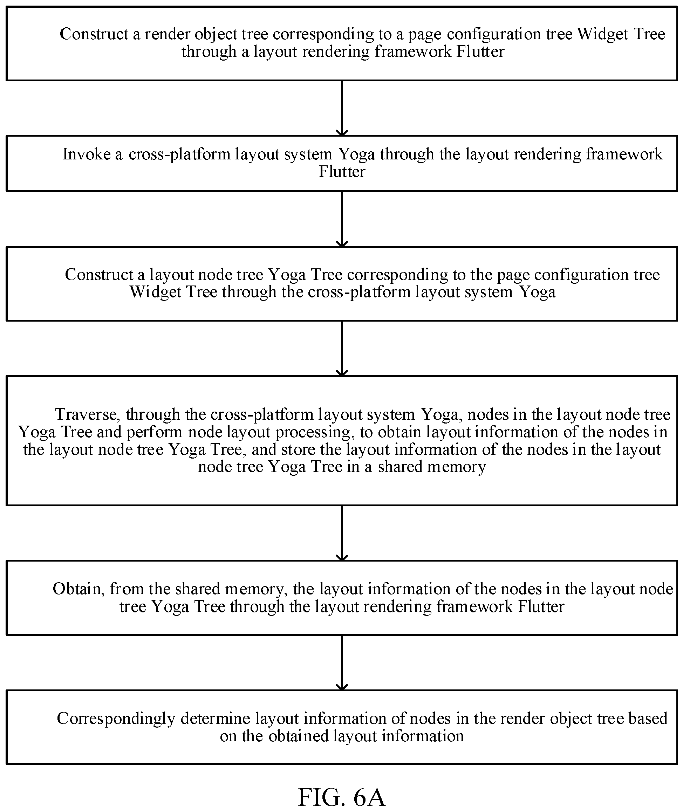

In an embodiment, FIG. 6A is a schematic flowchart of obtaining layout information of a target page according to an embodiment of this application. The electronic device may construct, through the layout rendering framework Flutter, the render object tree corresponding to the page configuration tree Widget Tree, and invoke the cross-platform layout system Yoga through the layout rendering framework Flutter; construct, through the cross-platform layout system Yoga, the layout node tree Yoga Tree corresponding to the page configuration tree Widget Tree, traverse, through the cross-platform layout system Yoga, the nodes in the layout node tree Yoga Tree and perform node layout processing, to obtain the layout information of the nodes in the layout node tree Yoga Tree, and store the layout information of the nodes in the layout node tree Yoga Tree in the shared memory; and obtain, from the shared memory, the layout information of the nodes in the layout node tree Yoga Tree through the layout rendering framework Flutter, and correspondingly determine the layout information of the nodes in the render object tree based on the obtained layout information.

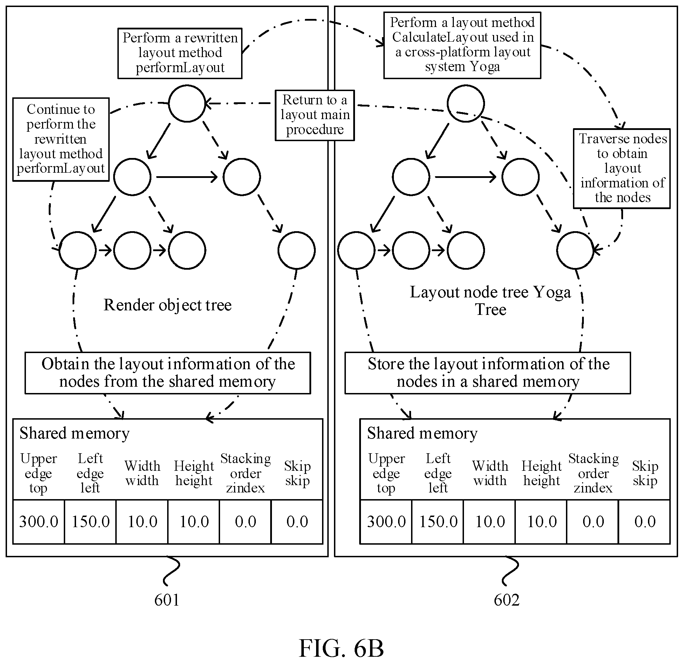

In some embodiments, that the electronic device invokes the cross-platform layout system Yoga through the layout rendering framework Flutter may be implemented by rewriting a layout method configured for traversing the nodes in the render object tree and performing node layout processing. A layout method CalculateLayout used in the cross-platform layout system Yoga may be invoked by using the rewritten layout method performLayout, to implement related operations of traversing the nodes in the layout node tree Yoga Tree through the cross-platform layout system Yoga and performing node layout processing. FIG. 6B is a schematic diagram of determining layout information of nodes in a render object tree according to an embodiment of this application. 601 is a running environment (that is, Dart VM) of a layout rendering framework Flutter, and a tree is a render object tree. 602 is a running environment (that is, a C/C++ native environment) of a cross-platform layout system, and a tree is a layout node tree Yoga Tree. After constructing a render object tree corresponding to a page configuration tree Widget Tree through a layout rendering framework Flutter, the electronic device may enter a layout main procedure through a rewritten layout method performLayout. A cross-platform layout system Yoga is invoked to enter a layout sub-procedure. After a layout node tree Yoga Tree corresponding to the page configuration tree Widget Tree is constructed through the cross-platform layout system Yoga, a layout procedure in the cross-platform layout system Yoga may be entered through a layout method CalculateLayout used in the cross-platform layout system Yoga. The cross-platform layout system Yoga may traverse nodes in the layout node tree Yoga Tree and perform node layout processing, to obtain layout information of the nodes in the layout node tree Yoga Tree, and store the layout information of the nodes in the layout node tree Yoga Tree in a shared memory. For example, obtained layout information of one of the nodes may be shown in FIG. 6B, and includes: an upper edge top of 300 pixels (px), a left edge left of 150 pixels, a width of 10 pixels, and a height of 10 pixels. The layout sub-procedure ends and the layout main procedure is returned. The layout main procedure continues to be performed through the layout rendering framework Flutter, that is, the rewritten layout method performLayout continues to be performed to obtain, from the shared memory, the layout information of the nodes in the layout node tree Yoga Tree. Layout information of nodes in the render object tree is determined correspondingly based on the obtained layout information. After the layout information of the nodes in the render object tree is obtained, the layout main procedure ends. It can be learned from the foregoing descriptions that, the layout process in the layout rendering framework Flutter and the layout process in the cross-platform layout system are combined by rewriting the layout method in the layout rendering framework Flutter and in the manner of setting the shared memory, and the cross-platform layout system Yoga is invoked through the layout rendering framework Flutter, so that a rate of obtaining the layout information of the target page can be improved, thereby improving a rendering rate when the page is rendered.

S403. Generate a painting instruction based on the layout information of the target page and the render object tree.

In an embodiment, the render object tree is obtained by the layout rendering framework based on the page configuration tree Widget Tree. A related process in which the layout rendering framework Flutter obtains the render object tree based on the page configuration tree Widget Tree has been described in operation S402, and may be implemented with reference to the implementation process of operation S402. The layout information of the target page includes layout information of the nodes in the render object tree. That the electronic device generates the painting instruction based on the layout information of the target page and the render object tree may be implemented through a rendering procedure. The electronic device may generate painting instructions corresponding to the nodes in the render object tree based on the layout information of the nodes in the render object tree, a traversing order of the nodes in the render object tree, a node inheritance relationship, and the like.

S404. Paint the target page in response to the painting instruction.

In an embodiment, that the electronic device paints and displays the target page in response to the painting instruction may be implemented through the graphics painting thread. The graph painting thread may perform tasks such as page painting and display; and may perform rasterization on the received painting instruction, and transmit a result of the rasterization to a GPU for painting and displaying the target page.

In the embodiments of this application, a page rendering method in which a page is rendered collaboratively by a layout rendering framework and a cross-platform layout system is provided. After style parsing processing is performed on a target page, to obtain a page configuration tree Widget Tree corresponding to the target page, the cross-platform layout system may be invoked through the layout rendering framework, and the cross-platform layout system constructs a layout node tree Yoga Tree based on the page configuration tree Widget Tree, and traverses nodes in the layout node tree Yoga Tree and performs node layout processing, to obtain layout information of the target page. A painting instruction may be generated based on the layout information of the target page, and the target page is painted in response to the painting instruction. The layout rendering framework can quickly construct a user interface, and a more professional cross-platform layout system is introduced into a layout task of a rendering procedure for performing layout processing to obtain the layout information of the target page, so that a rate of obtaining the layout information of the target page can be improved, and a rendering rate at which rendering processing is performed on a page can be improved, thereby implementing efficient page rendering, and making page rendering in an electronic device more timely.

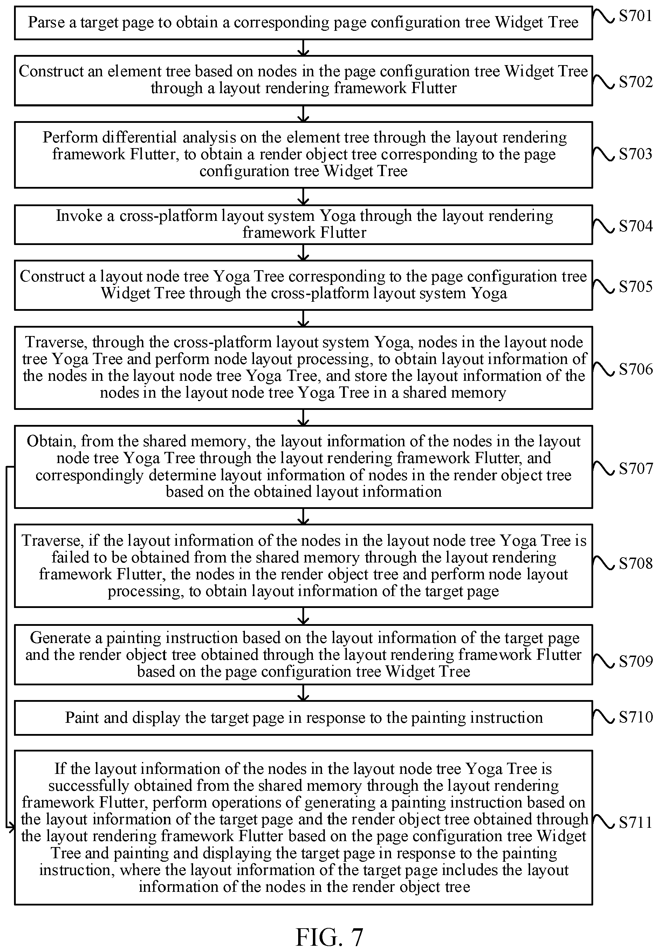

Based on related embodiments of the page rendering method, an embodiment of this application provides another page rendering method. FIG. 7 is a schematic flowchart of another page rendering method according to an embodiment of this application. The page rendering method shown in FIG. 7 may be performed by an electronic device. As shown in FIG. 7, the page rendering method may include the following operations.

S701. Parse a target page to obtain a corresponding page configuration tree Widget Tree.

S702. Construct an element tree based on nodes in the page configuration tree Widget Tree through a layout rendering framework Flutter.

S703. Perform differential analysis on the element tree through the layout rendering framework Flutter, to obtain a render object tree corresponding to the page configuration tree Widget Tree.

S704. Invoke a cross-platform layout system Yoga through the layout rendering framework Flutter.

S705. Construct a layout node tree Yoga Tree corresponding to the page configuration tree Widget Tree through the cross-platform layout system Yoga.

Nodes in the layout node tree Yoga Tree one to one correspond to nodes in the render object tree.

S706. Traverse, through the cross-platform layout system Yoga, nodes in the layout node tree Yoga Tree and perform node layout processing, to obtain layout information of the nodes in the layout node tree Yoga Tree, and store the layout information of the nodes in the layout node tree Yoga Tree in a shared memory.

S707. Obtain, from the shared memory, the layout information of the nodes in the layout node tree Yoga Tree through the layout rendering framework Flutter, and correspondingly determine layout information of the nodes in the render object tree based on the obtained layout information.

S708. Traverse, if the layout information of the nodes in the layout node tree Yoga Tree is failed to be obtained from the shared memory through the layout rendering framework Flutter, the nodes in the render object tree and perform node layout processing, to obtain layout information of the target page.

The layout information of the target page includes the layout information of the nodes in the render object tree.

S709. Generate a painting instruction based on the layout information of the target page and the render object tree obtained through the layout rendering framework Flutter based on the page configuration tree Widget Tree.

S710. Paint and display the target page in response to the painting instruction.

S711. If the layout information of the nodes in the layout node tree Yoga Tree is successfully obtained from the shared memory through the layout rendering framework Flutter, perform operations of generating a painting instruction based on the layout information of the target page and the render object tree obtained through the layout rendering framework Flutter based on the page configuration tree Widget Tree, and painting and displaying the target page in response to the painting instruction, where the layout information of the target page includes the layout information of the nodes in the render object tree.

Related processes from operation S701 to operation S711 are similar to those of the related processes from operation S401 to operation S404. In some embodiments, after style parsing processing is performed by the electronic device on the target page, the page configuration tree Widget Tree corresponding to the target page is obtained, the electronic device may invoke, through the layout rendering framework Flutter, the cross-platform layout system Yoga to obtain the layout information of the nodes in the layout node tree Yoga Tree, and store the layout information of the nodes in the layout node tree Yoga Tree in the shared memory, and may further traverse, through the layout rendering framework Flutter, the nodes in the render object tree and perform the node layout processing. The layout rendering framework Flutter may preferentially obtain, from the shared memory, the layout information of the nodes in the layout node tree Yoga Tree, correspondingly determine layout information of the nodes in the render object tree, and obtain, in a case that the layout information of the nodes in the layout node tree Yoga Tree is failed to be obtained, the layout information of the target page obtained through the layout rendering framework Flutter by traversing the nodes in the render object tree and performing the node layout processing.

In the embodiments of this application, the cross-platform layout system may be invoked first through the layout rendering framework, the layout information of the nodes in the layout node tree Yoga Tree is obtained through the cross-platform layout system, and the layout information of the nodes in the layout node tree Yoga Tree is stored in the shared memory. Then, the layout information of the nodes in the Yoga Tree is obtained from the shared memory through the layout rendering framework, and the layout information of the nodes in the render object tree is determined accordingly as the layout information of the target page. In addition, in a case that the layout information of the nodes in the layout node tree Yoga Tree is failed to be obtained from the shared memory through the layout rendering framework, the node layout processing is performed on the nodes in the render object tree, to obtain the layout information of the nodes in the render object tree. In a case that the layout information of the target page is failed to be obtained by invoking the cross-platform layout system through the layout rendering framework, saving processing may be performed, thereby increasing an error-tolerant rate of obtaining the layout information of the target page, improving stability of the page rendering, and reducing a possibility of a rendering failure.

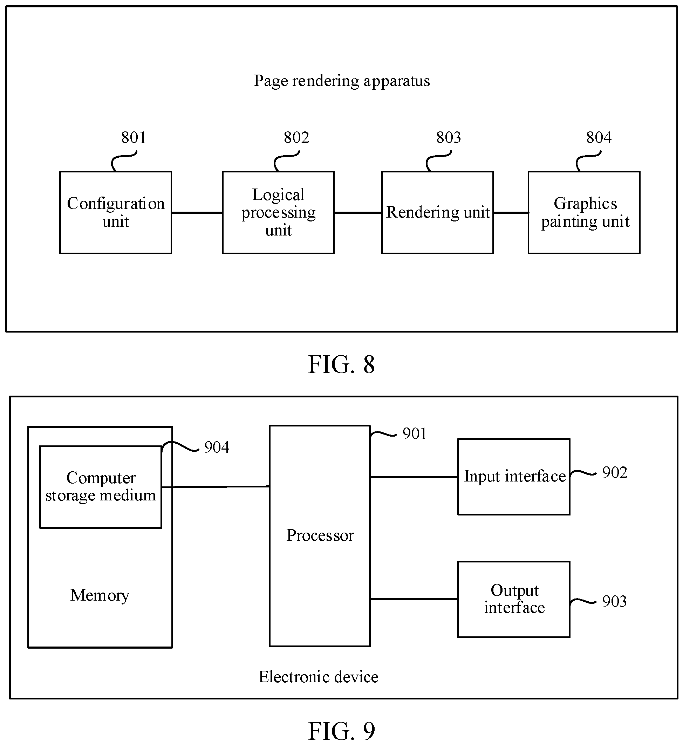

Based on the foregoing page rendering method embodiments, an embodiment of this application provides a page rendering apparatus. FIG. 8 is a schematic diagram of a structure of a page rendering apparatus according to an embodiment of this application. The page rendering apparatus may include a configuration unit 801, a logical processing unit 802, a rendering unit 803, and a graphics painting unit 804. The page rendering apparatus shown in FIG. 8 may run the following units:
the logical processing unit 802, configured to parse a target page to obtain a corresponding page configuration tree; the rendering unit 803, configured to obtain layout information of the target page by using a cross-platform layout system, the layout information of the target page being obtained by the cross-platform layout system by traversing nodes in a layout node tree and performing node layout processing, the layout node tree being constructed based on the page configuration tree; the rendering unit 803 being further configured to generate a painting instruction based on the layout information of the target page and the render object tree; and the graphics painting unit 804, configured to paint the target page in response to the painting instruction.

In an embodiment, when the logical processing unit 802 parses the target page to obtain the page configuration tree corresponding to the target page, the following operations are performed: parsing the target page to obtain component data; creating, based on a page template of the target page and the component data, a component node tree corresponding to the page template; and creating, based on the component node tree, a page configuration tree corresponding to the target page.

In an embodiment, the target page is a mini program page. When the logical processing unit 802 creates, based on the page template of the target page and the component data, the component node tree corresponding to the page template, the following operations are performed: invoking a first communication interface to transfer content data to a host program object of a mini program, the content data including the page template and the component data; and creating, through the host program object based on the content data, the component node tree corresponding to the page template.

In an embodiment, when the logical processing unit 802 creates, based on the component node tree, the page configuration tree corresponding to the target page, the following operations are performed: performing style matching processing on nodes in the component node tree to obtain element styles corresponding to the nodes in the component node tree; generating corresponding page configuration nodes based on the element styles corresponding to the nodes in the component node tree; and combining the page configuration nodes corresponding to the nodes in the component node tree, to obtain the page configuration tree.

In an embodiment, when the rendering unit 803 obtains the layout information of the target page by using the cross-platform layout system, the following operations are performed: invoking the cross-platform layout system through a layout rendering framework; obtaining the layout node tree corresponding to the page configuration tree; traversing, through the cross-platform layout system, the nodes in the layout node tree, and performing the node layout processing, to obtain the layout information of the target page, and storing the layout information of the target page in a shared memory; and obtaining the layout information of the target page from the shared memory.

In an embodiment, when the rendering unit 803 traverses, through the cross-platform layout system, the nodes in the layout node tree, and performing the node layout processing, to obtain the layout information of the target page, the following operations are performed: traversing the layout node tree through the cross-platform layout system, and applying a layout algorithm to each node in the layout node tree, to obtain layout information of the node, the layout information including at least offset information between the node and a parent nodes of the node; when layout information of a node does not include size information of the node, performing measurement processing on the node to obtain the size information of the node; incorporating the size information of the node into the layout information of the node; and determining the layout information of the nodes in the layout node tree as the layout information of the target page.

In an embodiment, the layout information of the target page includes layout information of the nodes in the layout node tree, and the rendering unit 803 is further configured to: construct the render object tree corresponding to the page configuration tree, nodes in the render object tree one to one corresponding to the nodes in the layout node tree; and
when the rendering unit 803 obtains the layout information of the target page from the shared memory, the following operations are performed: obtaining, from the shared memory, the layout information of the nodes in the layout node tree through the layout rendering framework; and correspondingly determining layout information of the nodes in the render object tree based on the obtained layout information.

In an embodiment, the rendering unit 803 is further configured to: construct an element tree based on nodes in the page configuration tree; and perform differential analysis on the element tree to obtain the render object tree corresponding to the page configuration tree.

In an embodiment, before the logical processing unit 802 parses the target page, the configuration unit 801 is configured to: obtain configuration information of the target page, the configuration information including: setting a renderer that is in a configuration file of the target page and that is configured to render the target page to a target rendering engine; and rendering, by the target rendering engine, a page through a logical processing thread, a rendering thread, and a graphics painting thread, where the logical processing thread is configured for parsing the target page, the rendering thread is configured for invoking, through a layout rendering framework, the cross-platform layout system to obtain the layout information of the target page and generating the painting instruction, and the graphics painting thread is configured for painting the target page in response to the painting instruction.

In an embodiment, the configuration unit 801 is further configured to: obtain rule configuration information for the target rendering engine, the rule configuration information including one or a combination of two of rule configuration information that prohibits global scrolling of the target page and rule configuration information that allows customization of a navigation bar of the target page.

According to an embodiment of this application, the operations involved in the page rendering method shown in FIG. 4 and FIG. 7 may be performed by units in the page rendering apparatus shown in FIG. 8. For example, operation S401 shown in FIG. 4 may be performed by the logical processing unit 802 in the page rendering apparatus shown in FIG. 8, operations S402 and operation S403 shown in FIG. 4 may be performed by the rendering unit 803 in the page rendering apparatus shown in FIG. 8, and operation S404 shown in FIG. 4 may be performed by the graphics painting unit 804 in the page rendering apparatus shown in FIG. 8. In another example, operation S701 shown in FIG. 7 may be performed by the logical processing unit 802 in the page rendering apparatus shown in FIG. 8, operations S702 to S709 shown in FIG. 7 may be performed by the rendering unit 803 in the page rendering apparatus shown in FIG. 8, operation S710 shown in FIG. 7 may be performed by the graphics painting unit 804 in the page rendering apparatus shown in FIG. 8, and operation S711 shown in FIG. 7 may be cooperatively performed by the rendering unit 803 and the graphics painting unit 804 in the page rendering apparatus shown in FIG. 8.

According to another embodiment of this application, a part or all of the units in the page rendering apparatus shown in FIG. 8 may be separately or wholly combined into one or more other units, or one (or more) units herein may further be divided into a plurality of units of smaller functions. In this way, same operations can be implemented, and implementation of the technical effects of the embodiments of this application is not affected. The foregoing units are obtained through division based on logical functions. In actual application, a function of one unit may be implemented by a plurality of units, or functions of a plurality of units are implemented by one unit. In another embodiment of this application, the page rendering apparatus obtained through division based on logical functions may alternatively include another unit. In actual application, the functions may be implemented with assistance of the another unit, and may be cooperatively implemented by a plurality of units.

According to another embodiment of this application, a computer program (including a program code) that can perform the operations involved in the corresponding methods shown in FIG. 4 and FIG. 7 may run on a general computing device of a computer including processing elements and storage elements such as a central processing unit (CPU), a random access memory (RAM), and a read-only memory (ROM), to construct the page rendering apparatus shown in FIG. 8, and implement the page rendering method according to embodiments of this application. The computer program may be recorded in, for example, a computer-readable storage medium, and may be loaded into the foregoing computing device by using the computer-readable storage medium, and run in the computing device.

In the embodiments of this application, a page rendering method in which a page is rendered collaboratively by a layout rendering framework and a cross-platform layout system is provided. After style parsing processing is performed on a target page, to obtain a page configuration tree Widget Tree corresponding to the target page, the cross-platform layout system may be invoked through the layout rendering framework, and the cross-platform layout system constructs a layout node tree Yoga Tree based on the page configuration tree Widget Tree, and traverses nodes in the layout node tree Yoga Tree and performs node layout processing, to obtain layout information of the target page. A painting instruction may be generated based on the layout information of the target page, and the target page is painted and displayed in response to the painting instruction. The layout rendering framework can quickly construct a user interface, and a more professional cross-platform layout system is introduced into a layout task of a rendering procedure for performing layout processing to obtain the layout information of the target page, so that a rate of obtaining the layout information of the target page can be improved, and a rendering rate at which rendering processing is performed on a page can be improved, thereby implementing efficient page rendering, and making page rendering in an electronic device more timely.

Based on the page rendering method embodiments and page rendering apparatus embodiments, this application further provides an electronic device. FIG. 9 is a schematic diagram of a structure of an electronic device according to an embodiment of this application. The electronic device shown in FIG. 9 includes at least a processor 901, an input interface 902, an output interface 903, and a computer storage medium 904. The processor 901, the input interface 902, the output interface 903, and the computer storage medium 904 may be connected by using a bus or in another manner.

The computer storage medium 904 may be stored in a memory of the electronic device. The computer storage medium 904 is configured to store a computer program. The computer program includes program instructions. The processor 901 is configured to execute the program instructions stored in the computer storage medium 904. The processor 901 (or referred to as a central processing unit (CPU)) is a computing core and a control core of the electronic device. The processor 901 is configured to implement one or more instructions, and is configured to load and execute the one or more instructions to implement the foregoing page rendering method procedure or a corresponding function.

An embodiment of this application further provides a computer storage medium. The computer storage medium is a memory device in an electronic device, and is configured to store a program and data. The computer storage medium herein may include an internal storage medium of a terminal, and certainly may also include an expanded storage medium supported by the terminal. The computer storage medium provides a storage space, and the storage space stores an operating system of the terminal. In addition, one or more instructions being suitable to be loaded and executed by a processor 901 are further stored in the storage space. These instructions may be one or more computer programs (including a program code). The computer storage medium herein may be a high-speed random access memory (RAM), or may be a non-volatile memory, for example, at least one magnetic disk memory. The computer storage medium may further be at least one computer storage medium located far away from the foregoing processor.

In an embodiment, the processor 901 may load and execute the one or more instructions stored in the computer storage medium to implement corresponding operations of the method in the foregoing page rendering method embodiments related to FIG. 4 and FIG. 7. In some embodiments, the processor 901 may be configured to:
parse a target page to obtain a corresponding page configuration tree; invoke, through a layout rendering framework, a cross-platform layout system to obtain layout information of the target page, the layout information of the target page being obtained by the cross-platform layout system by traversing nodes in a layout node tree and performing node layout processing, the layout node tree being constructed based on the page configuration tree; generate a painting instruction based on the layout information of the target page and a render object tree; and paint the target page in response to the painting instruction.

In an embodiment, when the processor 901 parses the target page to obtain the corresponding page configuration tree, the following operations are performed: parsing the target page to obtain component data; creating, based on a page template of the target page and the component data, a component node tree corresponding to the page template; and creating, based on the component node tree, a page configuration tree corresponding to the target page.

In an embodiment, the target page is a mini program page. When the processor 901 creates, based on the page template of the target page and the component data, the component node tree corresponding to the page template, the following operations are performed: invoking a first communication interface to transfer content data to a host program object of a mini program, the content data including the page template and the component data; and creating, through the host program object based on the content data, the component node tree corresponding to the page template.

In an embodiment, when the processor 901 creates, based on the component node tree, the page configuration tree corresponding to the target page, the following operations are performed: performing style matching processing on nodes in the component node tree to obtain element styles corresponding to the nodes in the component node tree; generating corresponding page configuration nodes based on the element styles corresponding to the nodes in the component node tree; and combining the page configuration nodes corresponding to the nodes in the component node tree, to obtain the page configuration tree.

In an embodiment, when the processor 901 obtains the layout information of the target page by using the cross-platform layout system, the following operations are performed: invoking the cross-platform layout system through the layout rendering framework; obtaining the layout node tree corresponding to the page configuration tree; traversing, through the cross-platform layout system, the nodes in the layout node tree, and performing the node layout processing, to obtain the layout information of the target page, and storing the layout information of the target page in a shared memory; and obtaining, from the shared memory, the layout information of the target page through the layout rendering framework.

In an embodiment, when the processor 901 traverses, through the cross-platform layout system, the nodes in the layout node tree, and performing the node layout processing, the following operations are performed: traversing the layout node tree through the cross-platform layout system, and applying a layout algorithm to each node in the layout node tree, to obtain layout information of the node, the layout information including at least offset information between the node and a parent node of the node; when the layout information of a node does not include size information of the node, performing measurement processing on the node to obtain the size information of the node; incorporating the size information of the node into the layout information of the node; and determining layout information of the nodes in the layout node tree as the layout information of the target page.

In an embodiment, the layout information of the target page includes the layout information of the nodes in the layout node tree, and the processor 901 is further configured to: construct the render object tree corresponding to the page configuration tree, nodes in the render object tree one to one corresponding to the nodes in the layout node tree; and
when the processor 901 obtains the layout information of the target page from the shared memory, the following operations are performed: obtaining, from the shared memory, the layout information of the nodes in the layout node tree through the layout rendering framework; and correspondingly determining layout information of the nodes in the render object tree based on the obtained layout information.

In an embodiment, the processor 901 is further configured to: construct an element tree based on the nodes in the page configuration tree; and perform differential analysis on the element tree to obtain the render object tree corresponding to the page configuration tree.

In an embodiment, before parsing the target page, the processor 901 is further configured to: obtain configuration information of the target page, the configuration information including: setting a renderer that is in a configuration file of the target page and that is configured to render the target page to a target rendering engine; and rendering, by the target rendering engine, a page through a logical processing thread, a rendering thread, and a graphics painting thread, where the logical processing thread is configured for parsing the target page, the rendering thread is configured for invoking, through a layout rendering framework, the cross-platform layout system to obtain the layout information of the target page and generating the painting instruction, and the graphics painting thread is configured for painting the target page in response to the painting instruction.

In an embodiment, the processor 901 is further configured to: obtain rule configuration information for the target rendering engine, the rule configuration information including one or a combination of two of rule configuration information that prohibits global scrolling of the target page and rule configuration information that allows customization of a navigation bar of the target page.

An embodiment of this application provides a computer program product. The computer program product includes a computer program, the computer program is stored in a computer storage medium, and a processor of a computer device reads the computer program from the computer storage medium. The processor executes the computer program, to enable the electronic device to perform the foregoing method embodiments shown in FIG. 4 and FIG. 7. The computer readable storage medium may be a magnetic disk, an optical disc, a read-only memory (ROM), a random access memory (RAM), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A page rendering method, applicable to an electronic device, the method comprising:
parsing a target page to obtain a corresponding page configuration tree;
obtaining layout information of the target page by using a cross-platform layout system which traverses nodes in a layout node tree and performs node layout processing to obtain page layout information of the target page, the layout node tree being constructed by using the page configuration tree;
generating a painting instruction based on the page layout information and a render object tree; and
painting the target page in response to the painting instruction.

2. The method according to claim 1, wherein the parsing a target page to obtain a corresponding page configuration tree comprises:
parsing the target page to obtain component data;
creating, based on a page template of the target page and the component data, a component node tree corresponding to the page template; and
creating, based on the component node tree, the page configuration tree corresponding to the target page.

3. The method according to claim 2, wherein the target page is a mini program page, and the creating, based on a page template of the target page and the component data, a component node tree corresponding to the page template comprises:
invoking a first communication interface to transfer content data to a host program object of a mini program, the content data comprising the page template and the component data; and
creating, through the host program object based on the content data, the component node tree corresponding to the page template.

4. The method according to claim 2 or 3, wherein the creating, based on the component node tree, the page configuration tree corresponding to the target page comprises:
performing style matching processing on nodes in the component node tree to obtain element styles corresponding to the nodes in the component node tree;
generating corresponding page configuration nodes based on the element styles corresponding to the nodes in the component node tree; and
combining the page configuration nodes corresponding to the nodes in the component node tree, to obtain the page configuration tree.

5. The method according to any one of claims 1 to 3, wherein the obtaining layout information of the target page by using a cross-platform layout system comprises:
invoking the cross-platform layout system through a layout rendering framework;
obtaining the layout node tree corresponding to the page configuration tree;
traversing, through the cross-platform layout system, the nodes in the layout node tree, and performing node layout processing, to obtain the layout information of the target page, and storing the layout information of the target page in a shared memory; and
obtaining the layout information of the target page from the shared memory.

6. The method according to claim 5, wherein the traversing, through the cross-platform layout system, the nodes in the layout node tree, and performing node layout processing, to obtain the layout information of the target page comprises:
traversing the layout node tree through the cross-platform layout system, and applying a layout algorithm to each node in the layout node tree, to obtain layout information of the node, the layout information comprising at least offset information between the node and a parent node of the node;
when layout information of a node does not comprise size information of the node, performing measurement processing on the node to obtain the size information of the node;
incorporating the size information of the node into the layout information of the node; and
determining layout information of the nodes in the layout node tree as the layout information of the target page.

7. The method according to claim 5, wherein the layout information of the target page comprises layout information of the nodes in the layout node tree, and the method further comprises:
constructing the render object tree corresponding to the page configuration tree, nodes in the render object tree one to one corresponding to the nodes in the layout node tree; and
the obtaining the layout information of the target page from the shared memory comprises:
obtaining, from the shared memory, the layout information of the nodes in the layout node tree through the layout rendering framework; and
correspondingly determining layout information of the nodes in the render object tree based on the obtained layout information.

8. The method according to any one of claims 1 to 3, wherein the method further comprises:
constructing an element tree based on nodes in the page configuration tree; and
performing differential analysis on the element tree to obtain the render object tree corresponding to the page configuration tree.

9. The method according to any one of claims 1 to 3, wherein before style parsing processing is performed on the target page, the method further comprises:
obtaining configuration information of the target page,
the configuration information comprising: setting a renderer that is in a configuration file of the target page and that is configured to render the target page to a target rendering engine; and rendering, by the target rendering engine, a page through a logical processing thread, a rendering thread, and a graphics painting thread, wherein
the logical processing thread is configured for parsing the target page, the rendering thread is configured for invoking, through a layout rendering framework, the cross-platform layout system to obtain the layout information of the target page and generating the painting instruction, and the graphics painting thread is configured for painting the target page in response to the painting instruction.

10. The method according to claim 9, wherein the method further comprises:
obtaining rule configuration information for the target rendering engine,
the rule configuration information comprising one or a combination of two of rule configuration information that prohibits global scrolling of the target page and rule configuration information that allows customization of a navigation bar of the target page.

11. A page rendering apparatus, comprising:
a logical processing unit, configured to parse a target page to obtain a corresponding page configuration tree;
a rendering unit, configured to obtain layout information of the target page by using a cross-platform layout system which traverses nodes in a layout node tree and performs node layout processing to obtain the layout information of the target page, the layout node tree being constructed based on the page configuration tree;
the rendering unit being further configured to generate a painting instruction based on the layout information of the target page and a render object tree; and
a graphics painting unit, configured to paint the target page in response to the painting instruction.

12. The apparatus according to claim 11, wherein that the logical processing unit performs style parsing processing on the target page to obtain the page configuration tree corresponding to the target page comprises:
parsing the target page to obtain component data;
creating, based on a page template of the target page and the component data, a component node tree corresponding to the page template; and
creating, based on the component node tree, the page configuration tree corresponding to the target page.

13. An electronic device, comprising an input interface and an output interface, and further comprising:
a processor, being suitable to implement one or more instructions; and
a computer storage medium, having one or more instructions stored therein, the one or more instructions being suitable to be loaded by the processor, to perform the page rendering method according to any one of claims 1 to 10.

14. A computer storage medium having stored thereon computer program instructions that when executed by a processor, perform the page rendering method according to any one of claims 1 to 10.

15. A computer program product, comprising a computer program which when executed by a processor, is loaded and performs the page rendering method according to any one of claims 1 to 10.
